(19) Europäisches Patentamt
European Patent Office
Office européen des brevets

(11) EP 3 940 944 A1

## (12) EUROPEAN PATENT APPLICATION
published in accordance with Art. 153(4) EPC

(43) Date of publication:
19.01.2022 Bulletin 2022/03

(21) Application number: 20770081.6

(22) Date of filing: 10.03.2020

(51) International Patent Classification (IPC):
$H02M\ 7/12^{(2006.01)}$ $\qquad$ $H02M\ 7/48^{(2007.01)}$

(52) Cooperative Patent Classification (CPC):
H02M 7/12; H02M 7/48

(86) International application number:
PCT/JP2020/010174

(87) International publication number:
WO 2020/184538 (17.09.2020 Gazette 2020/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 14.03.2019 JP 2019047374

(71) Applicant: DAIKIN INDUSTRIES, LTD.
Osaka-shi, Osaka 530-8323 (JP)

(72) Inventor: SAKAKIBARA, Kenichi
Osaka-Shi, Osaka 530-8323 (JP)

(74) Representative: Hoffmann Eitle
Patent- und Rechtsanwälte PartmbB
Arabellastraße 30
81925 München (DE)

(54) **CONTROL DEVICE FOR DIRECT POWER CONVERTER**

(57) A distortion of a waveform of a current input to a direct power converter from a sinusoidal wave is reduced. A control device (10) includes a duty generation unit (1020) and an inverter control unit (101). The duty generation unit generates a first duty (drec') and a second duty (dc'). The first duty is a duty in which a first current flows from a converter to a DC link. The second duty is a duty in which a second current flows from a power buffer circuit to the DC link. The inverter control unit outputs an inverter control signal (SSup, SSvp, SSwp, SSun, SSvn, SSwn) for controlling an operation of the inverter, on the basis of the first duty, the second duty, and a command value (Vu*, Vv*, Vw*) of a voltage output by the inverter.

F I G. 7

EP 3 940 944 A1

**Description**

Technical Field

The present disclosure relates to a technique for converting power.

Background Art

A component that ripples at a frequency twice a power source frequency is present in power obtained from a single-phase AC power source. To obtain a constant DC voltage by using a rectification circuit, a large-capacitance energy accumulation element is desired.

There has been proposed a technique for connecting a capacitor that constitutes an active buffer to a DC link through a switching element and causing the capacitor to function as a voltage source. In such a technique, the waveform of a current that flows through the active buffer is basically a sinusoidal wave.

PTL 1 is cited as a related-art literature relating to the present disclosure.

Citation List

Patent Literature

PTL 1: Japanese Patent No. 6265297

Summary of Invention

Technical Problem

The present disclosure provides a technique for reducing a distortion, from a sinusoidal wave, of a waveform of an input current input to a power converter.

Solution to Problem

A control device for a direct power converter according to the present disclosure is a control device (10) that controls a direct power converter (100). The direct power converter includes a DC link (7); a converter (3) that rectifies a single-phase AC voltage (Vin), converts AC power into DC power, and outputs first instantaneous power (Pin); a power buffer circuit (4) that receives and supplies power between the converter and the DC link and buffers second instantaneous power (Pbuf); and an inverter (5) that converts a DC voltage in the DC link into an AC voltage and outputs the AC voltage.

The control device according to a first aspect includes a duty generation unit (1020) that generates a first duty (drec', drec") and a second duty (dc', dc"), the first duty being a duty in which a first current (irec1) flows from the converter to the DC link, the second duty being a duty in which a second current (ic) flows from the power buffer circuit to the DC link; and an inverter control unit (101) that outputs an inverter control signal (SSup, SSvp, SSwp, SSun, SSvn, SSwn) for controlling an operation of the inverter, on the basis of the first duty, the second duty, and a command value (Vu*, Vv*, Vw*) of a voltage output by the inverter.

The first duty is equal to a sum of a first product and a second product. The first product is a product of a first ratio (Vdc/Vm) of a predetermined voltage (Vdc) to an amplitude (Vm) of the single-phase AC voltage and an absolute value ($|\sin(\omega t)|$) of a sine value of a phase ($\omega t$) of the single-phase AC voltage. The second product is a product ($\sqrt{2} \cdot (il0 - il) \cdot (Vdc/Vm)$, $\sqrt{2} \cdot il' \cdot (Vdc/Vm)$) of a third current (il0 - il, il'), the first ratio, and a value $\sqrt{2}$.

The third current is a current obtained by normalizing at least part of a harmonic component (il') of a fourth current (il) input to the power buffer circuit from the DC link or a difference (il0 - il) between a fundamental component of the fourth current and the fourth current by an effective value ($Im/\sqrt{2}$) of an input current (Iin) input to the converter (3).

In the direct power converter controlled by the control device according to a second aspect, the power buffer circuit (4) includes a discharge circuit (4a) including a capacitor (C4) and a first switch (Sc, D42) that connects the capacitor to the DC link; and a charge circuit (4b) that charges the capacitor.

The control device according to the second aspect is the control device according to the first aspect that outputs a first switch signal (SSc) for bringing the first switch into conduction, on the basis of the second duty (dc', dc").

The second duty is equal to a value obtained by subtracting a fourth product from a third product. The third product is a product of a second ratio (Vdc/Vc) of the predetermined voltage (Vdc) to a both-end voltage (Vc, Vc*) and a square ($\cos^2(\omega t)$) of a cosine value of the phase ($\omega t$) of the single-phase AC voltage, the both-end voltage being a voltage across the capacitor. The fourth product is a product of a third ratio (Vm/Vc) of the amplitude (Vm) to the both-end voltage, the second product ($\sqrt{2}\cdot$(il0 - il)$\cdot$(Vdc/Vm), $\sqrt{2}\cdot$il'$\cdot$(Vdc/Vm)), and the absolute value (|sin($\omega$t)|) of the sine value.

The control device according to a third aspect is the control device according the second aspect, in which the third current (il0 - il) is determined from a content of harmonic components included in the input current (Iin) with respect to a fundamental of the input current.

The control device according to a fourth aspect is the control device according to the second aspect, in which the third current (il') is a content of at least part of at least one frequency component of harmonic components included in the fourth current (il) with respect to a fundamental of the input current (Iin).

The control device according to a fifth aspect is the control device according to any one of the second aspect to the fourth aspect, in which the duty generation unit includes a duty calculation unit (1021) that obtains an original first duty (drec) by using the first product and obtains an original second duty (dc) by using the third product; and a duty correction unit (1023) that obtains the first duty (drec', drec") from the second product and the original first duty and obtains the second duty (dc', dc") from the fourth product and the original second duty.

In the direct power converter controlled by the control device according to a sixth aspect, the charge circuit (4b) includes a reactor (L4) that accumulates energy in the capacitor (C4); and a second switch (SI, D41) that connects the converter (3) to the reactor and causes the reactor to accumulate energy.

The control device according to the sixth aspect is the control device according to any one of the second aspect to the fifth aspect that further includes a switch signal generation unit (1031) that generates a second switch signal (SSI) for turning the second switch ON once and OFF once in a half-period of the single-phase AC voltage (Vin).

The control device for a direct power converter according to the first aspect of this disclosure reduces a distortion of a waveform of the input current with respect to a sinusoidal wave.

The control device for a direct power converter according to the second to fifth aspects of this disclosure is advantageous from the perspective of reducing ripples in power output by the inverter.

The control device for a direct power converter according to the sixth aspect of this disclosure is advantageous from the perspective of reducing switching noise.

Brief Description of Drawings

[Fig. 1] Fig. 1 is a block diagram illustrating a configuration of a direct power converter.
[Fig. 2] Fig. 2 is a circuit diagram of an equivalent circuit of the direct power converter.
[Fig. 3] Fig. 3 is a block diagram schematically illustrating power input and output in the direct power converter.
[Fig. 4] Fig. 4 depicts graphs illustrating an operation of the direct power converter.
[Fig. 5] Fig. 5 is a graph illustrating waveforms of currents that flow through a reactor.
[Fig. 6] Fig. 6 depicts graphs illustrating an operation of the direct power converter.
[Fig. 7] Fig. 7 is a block diagram illustrating a configuration of a control device.
[Fig. 8] Fig. 8 is a graph illustrating a waveform of a current that flows through the reactor.
[Fig. 9] Fig. 9 depicts graphs illustrating an operation of the direct power converter.
[Fig. 10] Fig. 10 is a block diagram illustrating a first configuration of a discharge control unit and components therearound.
[Fig. 11] Fig. 11 is a block diagram illustrating a second configuration of the discharge control unit and the components therearound.
[Fig. 12] Fig. 12 is a graph illustrating spectra of harmonics of an input current.
[Fig. 13] Fig. 13 is a graph illustrating waveforms of currents that flow through the reactor.
[Fig. 14] Fig. 14 is a graph illustrating spectra of harmonics of the input current.
[Fig. 15] Fig. 15 is a graph illustrating spectra of harmonics of the input current.
[Fig. 16] Fig. 16 depicts graphs illustrating an operation of the direct power converter.

Description of Embodiments

{A. Configurations of Power Converter and Control Device for Power Converter}

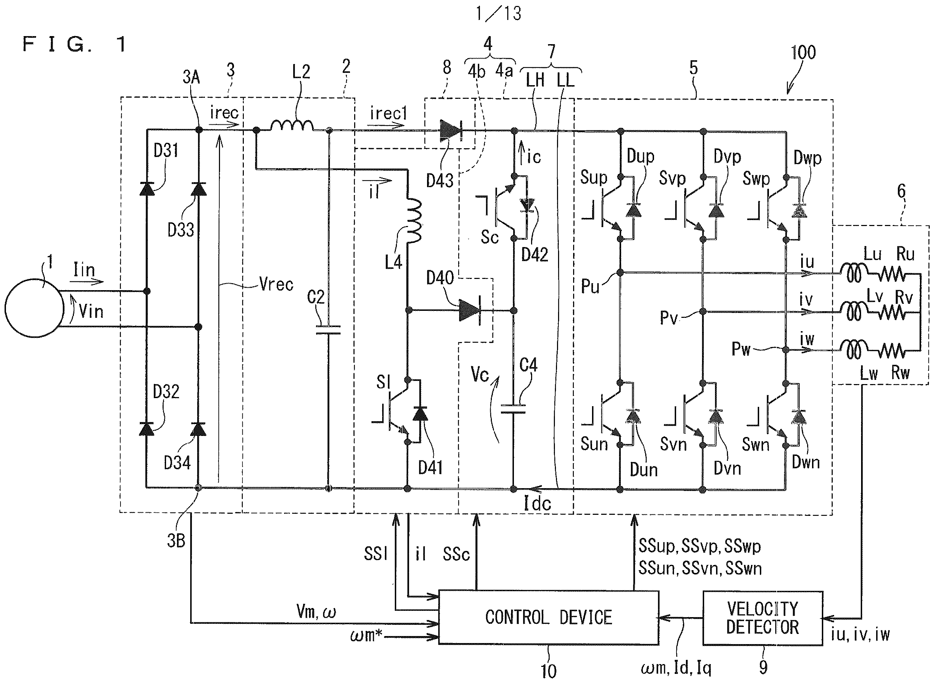

Fig. 1 is a block diagram illustrating a configuration of a direct power converter 100. A control technique according to the present disclosure is applicable to the direct power converter 100. The direct power converter 100 includes a converter 3, a filter 2, a power buffer circuit 4, an inverter 5, and a DC link 7. The power buffer circuit 4 functions as the aforementioned active buffer.

The converter 3 adopts, for example, a diode bridge and includes diodes D31 to D34. The diodes D31 to D34 constitute a bridge circuit. A single-phase AC voltage Vin (= Vm$\cdot$sin($\omega$t)) is input to the converter 3 from a single-phase AC power source 1. The converter 3 performs single-phase full-wave rectification on the AC voltage Vin to obtain a rectified voltage Vrec (= |Vin|) and outputs the rectified voltage Vrec to the filter 2 and the power buffer circuit 4. An input current Iin flows into the converter 3 from the single-phase AC power source 1. The converter 3 outputs a current irec (= |Iin|; Iin = Im·sin(ωt)).

The filter 2 includes a reactor L2 and a capacitor C2. One end of the reactor L2 is connected to a high-potential terminal 3A on an output side of the converter 3, specifically, to both of a cathode of the diode D31 and a cathode of the diode D33. Another end of the reactor L2 is connected, through the capacitor C2, to a low-potential terminal 3B on an output side of the converter 3, specifically, to both of an anode of the diode D32 and an anode of the diode D34.

Thus, in the filter 2, the rectified voltage Vrec is input to series connection of the reactor L2 and the capacitor C2, and a voltage retained by the capacitor C2 is output. Note that the filter 2 functions to remove a highfrequency component of the current. Thus, the voltage retained by the capacitor C2 is also treated to be equal to the rectified voltage Vrec in the description below.

The DC link 7 includes a DC power source line LL and a DC power source line LH having a higher potential than the DC power source line LL. The DC power source line LH is connected to the high-potential terminal 3A of the converter 3 through a reverse current blocking circuit 8 (described later) and the reactor L2. The DC power source line LL is connected to the low-potential terminal 3B of the converter 3.

The power buffer circuit 4 includes a discharge circuit 4a and a charge circuit 4b. The power buffer circuit 4 receives and supplies power between the converter 3 and the DC link 7. The discharge circuit 4a includes a capacitor C4 serving as a buffer capacitor. The charge circuit 4b boosts the rectified voltage Vrec and charges the capacitor C4.

The discharge circuit 4a further includes a diode D42 and a transistor (insulated gate bipolar transistor in this case: hereinafter abbreviated as "IGBT") Sc connected in antiparallel with the diode D42. The transistor Sc is connected in series with the capacitor C4 between the DC power source line LH and the DC power source line LL to be closer to the DC power source line LH than the capacitor C4 is.

The antiparallel connection mentioned herein indicates parallel connection with forward directions opposite to each other. Specifically, the forward direction of the transistor Sc is a direction from the DC power source line LL to the DC power source line LH, and the forward direction of the diode D42 is a direction from the DC power source line LH to the DC power source line LL. The transistor Sc and the diode D42 can be collectively regarded as a single switch element (switch Sc). When the switch Sc is conducting, the capacitor C4 is connected to the DC link 7 and the capacitor C4 discharges and provides power to the DC link 7.

The charge circuit 4b includes, for example, a diode D40, a reactor L4, and a transistor (IGBT in this case) Sl. The diode D40 has a cathode and an anode. The cathode is connected between the switch Sc and the capacitor C4. Such a configuration is known as a so-called boost chopper.

The reactor L4 is connected between the high-potential terminal 3A and the anode of the diode D40. The transistor Sl is connected between the DC power source line LL and the anode of the diode D40. The transistor Sl and a diode D41 are connected in antiparallel with each other, and can be collectively regarded as a single switch element (switch Sl). Specifically, the forward direction of the transistor Sl is a direction from the high-potential terminal 3A to the low-potential terminal 3B, and the forward direction of the diode D41 is a direction from the low-potential terminal 3B to the high-potential terminal 3A.

The capacitor C4 is charged by the charge circuit 4b. A voltage Vc across the capacitor C4 (hereinafter, simply referred to as "both-end voltage") is higher than the rectified voltage Vrec. The switch Sl conducts to connect the converter 3 to the reactor L4 and to accumulate energy in the reactor L4. Specifically, a current is caused to flow from the high-potential terminal 3A to the low-potential terminal 3B through the switch Sl, and consequently energy is accumulated in the reactor L4. Then, the switch Sl is turned OFF, and consequently the energy is accumulated in the capacitor C4 through the diode D40.

Since the both-end voltage Vc is higher than the rectified voltage Vrec, a current does not flow through the diode D42 as a rule. Thus, whether the switch Sc is conducting or not depends solely on whether the transistor Sc is conducting or not. Here, the diode D42 ensures a reverse breakdown voltage when the both-end voltage Vc is lower than the rectified voltage Vrec, and brings a current flowing back from an inductive load 6 to the DC link 7 into reverse conduction when the inverter 5 abnormally stops.

Since the forward direction of the diode D41 is a direction from the low-potential terminal 3B to the high-potential terminal 3A, a current does not flow through the diode D41 as a rule. Thus, whether the switch Sl is conducting or not depends solely only on whether the transistor Sl is conducting or not. The diode D41 is a diode that provides a reverse breakdown voltage and reverse conduction. Although the diode D41 is illustrated as a diode included in the transistor Sl implemented by an IGBT, the diode D41 itself does not involve in operation of the circuit.

The reverse current blocking circuit 8 is provided between the filter 2 and the DC power source line LH and blocks a current that flows back from the discharge circuit 4a to the filter 2. The reverse current blocking circuit 8 is implemented by, for example, a diode D43. An anode of the diode D43 is connected to the filter 2, more specifically, to the high-potential terminal 3A through the reactor L2. A cathode of the diode D43 is connected to the DC power source line LH. Such a reverse current blocking circuit 8 is publicly known due to, for example, Japanese Patent No. 5772915.

A current irec1 that is input to the reverse current blocking circuit 8 from the converter 3 through the filter 2 and a current il that flows from the converter 3 to the power buffer circuit 4, specifically, to the charge circuit 4b, without through the filter 2 are introduced. Then, a current irec output from the converter 3 is a sum of the current irec1 and the current il. The current il flows through the reactor L4 and is in a relationship of il = irec - irec1. The current il is measured by a well-known current sensor, for example. Illustration of the configuration for obtaining the current il is omitted, being a well-known technique.

Since the both-end voltage Vc is higher than the rectified voltage Vrec, the current irec1 takes a value of 0 when the switch Sc is in conduction.

Note that instead of being connected directly to the high-potential terminal 3A, the reactor L4 may be connected through the reactor L2. In such a case, however, the current il also flows through the filter 2 instead of the current irec1. Thus, a large current-carrying capacity is desired for the filter 2. In other words, from the perspective of reducing the current-carrying capacity of the filter 2 and consequently reducing the size of the filter 2, the reactor L4 is desirably connected to a position closer to the converter 3 than the filter 2 is.

The inverter 5 converts a DC voltage in the DC link 7, more specifically, across the DC power source line LH and the DC power source line LL, into an AC voltage and outputs the AC voltage to output terminals Pu, Pv, and Pw. The DC voltage is the both-end voltage Vc when the switch Sc is in conduction. The DC voltage is the rectified voltage Vrec when the switch Sc is not in conduction if a voltage drop at the reverse current blocking circuit 8 and the reactor L2 is ignored.

The inverter 5 is, for example, a three-phase voltage inverter and includes six switching elements Sup, Svp, Swp, Sun, Svn, and Swn. The switching element Sup is connected between the output terminal Pu and the DC power source line LH. The switching element Svp is connected between the output terminal Pv and the DC power source line LH. The switching element Swp is connected between the output terminal Pw and the DC power source line LH. The switching element Sun is connected between the output terminal Pu and the DC power source line LL. The switching element Svn is connected between the output terminal Pv and the DC power source line LL. The switching element Swn is connected between the output terminal Pw and the DC power source line LL. The inverter 5 constitutes a so-called voltage inverter and includes six diodes Dup, Dvp, Dwp, Dun, Dvn, and Dwn.

Each of the diodes Dup, Dvp, Dwp, Dun, Dvn, and Dwn is arranged such that a cathode thereof is directed toward the DC power source line LH and an anode thereof is directed toward the DC power source line LL. The diode Dup is connected in parallel with the switching element Sup between the output terminal Pu and the DC power source line LH. Likewise, the diode Dvp is connected in parallel with the switching element Svp, the diode Dwp is connected in parallel with the switching element Swp, the diode Dun is connected in parallel with the switching element Sun, the diode Dvn is connected in parallel with the switching element Svn, and the diode Dwn is connected in parallel with the switching element Swn. A load current iu is output from the output terminal Pu. A load current iv is output from the output terminal Pv. A load current iw is output from the output terminal Pw. The load currents iu, iv, and iw form a three-phase AC current. For example, IGBTs are adopted as all the switching elements Sup, Svp, Swp, Sun, Svn, and Swn.

The inductive load 6 is, for example, a rotary machine, and is illustrated by an equivalent circuit representing an inductive load. Specifically, a reactor Lu and a resistor Ru are connected in series to each other, and one terminal of this series body is connected to the output terminal Pu. The same applies to reactors Lv and Lw and resistors Rv and Rw. Other ends of these series bodies are connected to each other.

The inductive load 6 serving as a synchronous machine will be described. A velocity detector 9 detects the load currents iu, iv, and iw that flow through the inductive load 6. The velocity detector 9 provides a control device 10 for a direct power converter, with a rotation angular velocity $\omega m$ of the synchronous machine 6, a q-axis current Iq, and a d-axis current Id (strictly speaking, information indicating these; the same applies to below) that are obtained from the load currents iu, iv, and iw.

The amplitude Vm of the single-phase AC voltage Vin, the angular velocity $\omega$ (or a phase $\theta = \omega t$ which is a product of the angular velocity $\omega$ and time t), a command value $\omega m^*$ of the rotation angular velocity $\omega m$, and the current il are input to the control device 10 in addition to the rotation angular velocity $\omega m$, the q-axis current Iq, and the d-axis current Id.

{B. Equivalent Circuit of Direct Power Converter and Various Duties}

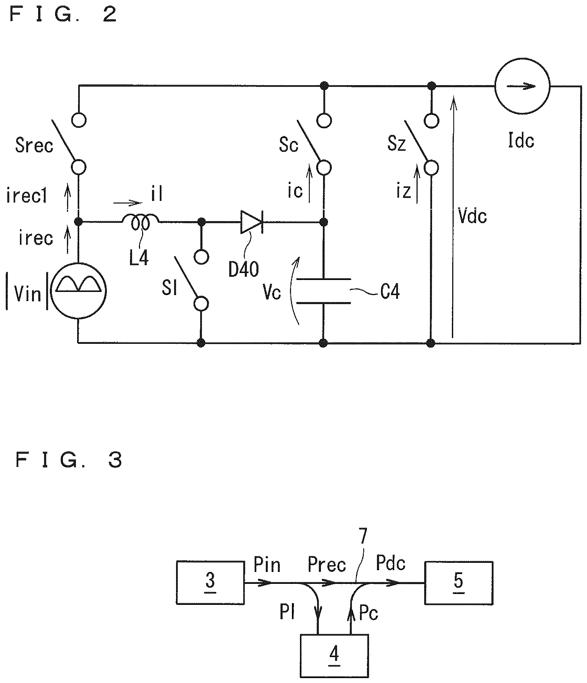

Fig. 2 is a circuit diagram of an equivalent circuit of the direct power converter 100 illustrated in Fig. 1. The equivalent circuit is introduced in, for example, Japanese Patent No. 5804167 and/or Japanese Patent No. 5874800. In the equivalent circuit, the current irec1 is equivalently illustrated as the current irec1 that flows through a switch Srec when the switch Srec is in conduction. Likewise, a current ic is equivalently illustrated as the current ic that flows through the switch Sc when the switch Sc is in conduction.

A current that flows through the inductive load 6 through the inverter 5 when the output terminals Pu, Pv, and Pw of the inverter 5 are connected in common to the DC power source line LH or the DC power source line LL is also equivalently illustrated as a zero-phase current iz that flows through a switch Sz when the switch Sz is in conduction.

The inverter 5 and the inductive load 6 are equivalently illustrated as a current source Idc that causes a DC current Idc to flow.

Fig. 2 illustrates the reactor L4, the diode D40, and the switch SI that constitute the charge circuit 4b. Fig. 2 illustrates the current il that flows through the reactor L4.

Duties drec', dc', and dz' in which the switches Srec, Sc, and Sz are respectively in conduction are introduced in the equivalent circuit. As is publicly known from Japanese Patent No. 5804167 and/or Japanese Patent No. 5874800, $0 \leq drec' \leq 1$, $0 \leq dc' \leq 1$, $0 \leq dz' \leq 1$, and drec' + dc' + dz' = 1 hold.

The duty drec' is a duty for setting a period in which the converter 3 can cause a current to flow to the DC link 7 to the inverter 5. Hereinafter, the duty for setting the period in which the converter 3 can cause the current to flow to the DC link 7 to the inverter 5 may also be referred to as a "first duty".

The duty dc' is a duty in which the capacitor C4 discharges. Hereinafter, the duty in which the capacitor C4 discharges may also be referred to as a "second duty".

The duty dz' is a duty in which the zero-phase current iz flows through the inverter 5 independently from the voltage output by the inverter 5. Hereinafter, the duty in which the zero-phase current iz flows through the inverter 5 independently from the voltage output by the inverter 5 may also be referred to as a "third duty".

The DC current Idc is a current that flows to the inductive load 6 through the inverter 5. The currents irec1, ic, and iz are products of the DC current Idc and the duties drec', dc', and dz', respectively. The currents irec1, ic, and iz are average values in switching periods of the switches Srec, Sc, and Sz, respectively. The duties drec', dc', and dz' can be regarded as current distribution factors of the DC current Idc to the currents irec1, ic, and iz, respectively.

When the converter 3 adopts a diode bridge, the converter 3 is unable to actively perform switching in accordance with the first duty drec'. The inverter 5 performs switching in accordance with the third duty dz' and the switch Sc performs switching in accordance with the second duty dc', and consequently the current irec1 can be obtained.

Overview of Operation of Power Buffer Circuit 4.

Instantaneous power Pin input to the converter 3 is represented by Formula (1). In derivation of Formula (1), an amplitude Im of the input current Iin is adopted and an input power factor is set to 1.

[Math. 1]

$$\mathrm{Pin} = \mathrm{Vm} \cdot \mathrm{Im} \cdot \sin^2(\omega t)$$

$$= \frac{\mathrm{Vm} \cdot \mathrm{Im}}{2} - \frac{\mathrm{Vm} \cdot \mathrm{Im}}{2} \cdot \cos(2\omega t) \qquad \cdots (1)$$

The instantaneous power Pin has an AC component $(-1/2) \cdot Vm \cdot Im \cdot \cos(2\omega t)$ represented by the second term on the rightmost side of Formula (1). Hereinafter, this AC component may also be referred to as an "AC component Pin^".

Fig. 3 is a block diagram schematically illustrating power input and output in the direct power converter 100 illustrated in Fig. 1.

The power converter illustrated in Fig. 1 can be grasped as follows.

The converter 3 rectifies the single-phase AC voltage Vin, converts AC power into DC power, and outputs the instantaneous power Pin. The power buffer circuit 4 buffers instantaneous power Pbuf between the converter 3 and the DC link 7. The instantaneous power Pbuf to be buffered is equal to a power difference (Pc - Pl) obtained by subtracting instantaneous power Pl from instantaneous power Pc. The instantaneous power Pl is input to the power buffer circuit 4 from the converter 3. The power buffer circuit 4 outputs the instantaneous power Pc to the DC link 7.

The current iL is input to the charge circuit 4b from the converter 3, thus, the instantaneous power Pl is input. The instantaneous power Pc is instantaneous power obtained by the current ic that flows from the power buffer circuit 4 (more specifically, the discharge circuit 4a) to the DC link 7 and by the both-end voltage Vc. Instantaneous power Pdc is equal to instantaneous power (= Pin + Pc - Pl) obtained by subtracting the instantaneous power Pl from the sum of the instantaneous power Pin and the instantaneous power Pc. The instantaneous power Pdc is equal to instantaneous power Pout output by the inverter 5 if a loss in the inverter 5 is ignored.

Instantaneous power Prec is instantaneous power obtained by the current irec1 that flows from the converter 3 to the DC link 7 through the filter 2 and the reverse current blocking circuit 8 and by the rectified voltage Vrec. The instantaneous power Prec is equal to a power difference (Pin - Pl). Thus, Pdc = Prec + Pc holds.

The inverter 5 converts DC voltage in the DC link 7 into AC voltage. The instantaneous power Pdc is input to the inverter 5 from the DC link 7. The inverter 5 outputs the load currents iu, iv, and iw.

When the power buffer circuit 4 receives and supplies power equivalent to an absolute value |Pin^| of the AC component Pin^ from and to the DC link 7, Pdc = Pin - Pin^ holds. Thus, Formula (2) holds.
[Math. 2]

$$Pdc = \frac{Vm \cdot Im}{2} \quad \cdots (2)$$

As in PTL 1, a DC voltage Vdc used in the DC link 7 to supply power to the inverter 5 is introduced. The DC voltage Vdc is noted as a voltage across the current source Idc in Fig. 2.
In consideration of Formula (2), the DC current Idc can be represented by Formula (3). The DC voltage Vdc can be represented by Formula (4).
[Math. 3]

$$Idc = \frac{Pdc}{Vdc} = \frac{Vm \cdot Im}{2 \cdot Vdc} \quad \cdots (3)$$

[Math. 4]

$$Vdc = Vrec \cdot drec' + Vc* \cdot dc' + 0 \cdot dz' \quad \cdots (4)$$

The case of performing well-known dq-axis control is presented as an example of a normal AC load operation. Power equation on the dq axis is generally represented by Formula (5). Symbols V* and I represent a command value of a voltage applied to the AC load and a current flowing through the AC load, respectively. Since these symbols V* and I represent AC voltage and current, dots indicating complex numbers are written above the symbols, respectively. Ideally, a q-axis voltage follows a command value Vq* thereof and a d-axis voltage follows a command value Vd* thereof.
[Math. 5]

$$P + jQ = \dot{V}* \cdot \dot{I} = Vd* \cdot Id + Vq* \cdot Iq + j(Vq* \cdot Id - Vd* \cdot Iq)$$

$$\cdots (5)$$

The instantaneous power Pdc supplied to the inverter 5 from the DC power source lines LH and LL does not contain reactive power. The instantaneous power Pdc is represented by Formula (6) with the second term on the rightmost side of Formula (5) being ignored.
[Math. 6]

$$Pdc = Vd* \cdot Id + Vq* \cdot Iq \quad \cdots (6)$$

Thus, control for implementing Formulas (3) and (4) can be performed by performing control for making ripples (AC components) in Formula (6) zero. Description of an example of a configuration for performing the aforementioned control is omitted, being publicly known in, for example, PTL 1.

{C. In Case where Current il is Sinusoidal Wave}

An original first duty drec and an original second duty dc are defined by Formulas (7) and (8), respectively. Note that a command value Vdc* of the DC voltage Vdc can be adopted as the DC voltage Vdc. That is, the DC voltage Vdc is treated as a predetermined voltage below.
[Math. 7]

$$drec = \frac{Vdc}{Vm} \cdot \left| \sin(\omega t) \right| \qquad \cdots (7)$$

[Math. 8]

$$dc = \frac{Vdc}{Vc*} \cdot \cos^2(\omega t)$$

$$= \frac{Vdc}{2 \cdot Vc*} \cdot [1 + \cos(2\omega t)] \qquad \cdots (8)$$

As long as Vdc ≤ Vm holds, 0 ≤ drec ≤ 1 is satisfied. By setting the DC voltage Vdc to be lower than or equal to a command value Vc*, a setting for satisfying 0 ≤ dc ≤ 1 can be made.

Formula (9), which is derived from Formulas (7) and (8), corresponds to the case where drec' = drec, dc' = dc, and dz' = dz are set in Formula (4). Thus, Formulas (4) and (9) suggest the appropriateness of the control using the original first duty drec as the first duty drec' and the original second duty dc as the second duty dc'.

[Math. 9]

$$Vrec \cdot drec + Vc* \cdot dc + 0 \cdot dz$$

$$= Vm \cdot \left| \sin(\omega t) \right| \cdot \frac{Vdc}{Vm} \cdot \left| \sin(\omega t) \right| + Vdc \cdot \cos^2(\omega t)$$

$$= Vdc \qquad \cdots (9)$$

From Formulas (3) and (7), the current irec1 in the case of performing the control using the original first duty drec is determined by using Formula (10).

[Math. 10]

$$irec1 = drec \cdot Idc$$

$$= \frac{Vdc}{Vm} \cdot \left| \sin(\omega t) \right| \cdot \frac{Vm \cdot Im}{2 \cdot Vdc}$$

$$= \frac{Im}{2} \cdot \left| \sin(\omega t) \right| \qquad \cdots (10)$$

As described in Japanese Patent No. 5804167 and Japanese Patent No. 5874800, when the current il takes a value il0 = irec1 represented by Formula (11), as a result of the control using the original first duty drec and the original second duty dc, the input current Iin becomes a sinusoidal wave.

[Math. 11]

$$i1 = i10 = Im \cdot \left| \sin(\omega t) \right| - irec1$$

$$= \frac{Im}{2} \cdot \left| \sin(\omega t) \right|$$

$$= irec1 \qquad \cdots (11)$$

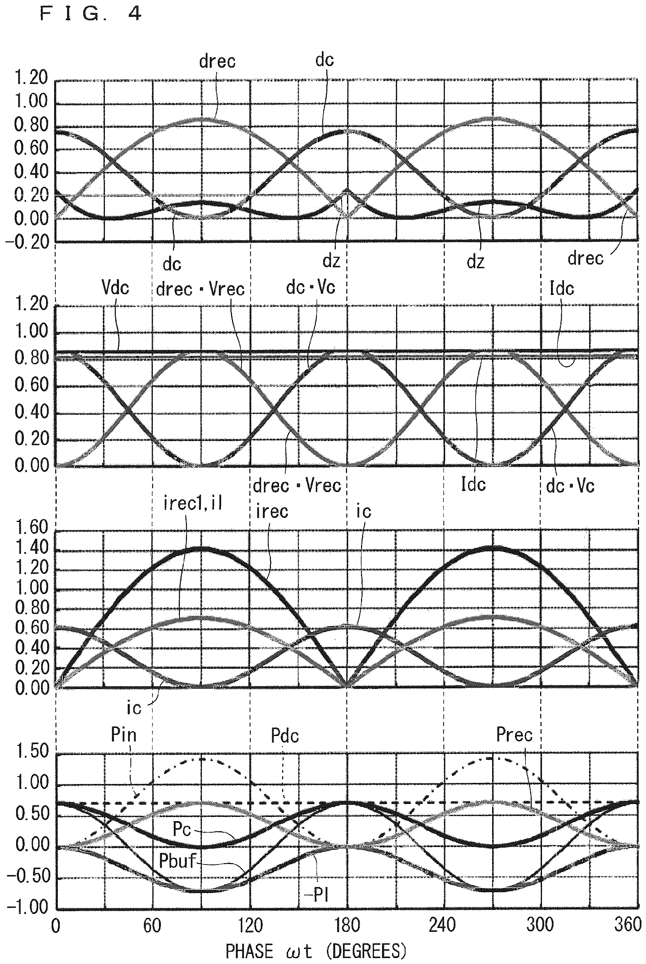

Fig. 4 depicts graphs illustrating an operation of the direct power converter 100 illustrated in Fig. 1. The operation in the case where the current il takes the value il0 and control is performed in accordance with the original first duty drec and the original second duty dc is illustrated. dz = 1 - dc - drec holds. The both-end voltage Vc precisely follows the command value Vc*.

In Fig. 4, the uppermost portion illustrates the duties drec, dc, and dz. The second portion from the top illustrates the DC voltage Vdc, the voltages drec·Vrec and dc·Vc (see Formula (4)) constituting the DC voltage Vdc, and the DC current Idc. The third portion from the top illustrates the currents irec, ic, il, and irec1. The lowermost portion illustrates the instantaneous powers Pin, Pdc, Pbuf, Pc, -Pl, and Prec.

A phase ωt with a unit "degrees" is adopted and represented by the horizontal axis in Fig. 4. Values normalized by the effective value Im/√2 of the amplitude Im are adopted as the currents Idc, irec, ic, il, and irec1. This normalization is equivalent to conversion of values of these currents with Im = √2. The voltages Vrec·drec and Vc·dc are converted with the amplitude Vm set to 1, and Vc = 1.14Vm is set. By setting Vdc = 0.86Vm, the minimum value of dz = 1 - dc - drec is made equal to 0. Each of the instantaneous powers Pin, Pout, Pbuf, Pc, -Pl, and Prec is determined as a product of the voltage thus converted and the current.

{D. In Case where Current il Includes Harmonic Components (I)}

If the current il not having a waveform of the absolute value of the sinusoidal wave is caused to flow under the control using the original first duty drec, the input current Iin may distort from the sinusoidal wave. In this case, the value il0 represents the fundamental component of the current il.

The original first duty drec is corrected in the following manner, and consequently the first duty drec' is obtained. The direct power converter 100 is controlled by using the first duty drec'. In view of the continuity of the current, the first duty drec' with which a relationship represented by Formula (12) holds is introduced.

[Math. 12]

$$(drec' - drec) \cdot Idc + (il - il0) = 0$$

$$\therefore drec' = drec + (il0 - il) / Idc \qquad \cdots (12)$$

The second term (il0 - il)/Idc on the right side of the second equation of Formula (12) denotes a correction amount Δdrec' for the original first duty drec. That is, drec' = drec + Δdrec' holds. If il = il0 holds, drec' = drec and Δdrec' = 0 hold. This corresponds to "C. In Case where Current il is Sinusoidal Wave." described above.

Formula (10) is modified, and consequently Formula (13) is obtained. Formula (13) is further modified, and consequently Formula (14) is obtained. Formula (14) can be regarded as a value obtained by normalizing the DC current Idc by the effective value Im/√2 of the input current Iin.

[Math. 13]

$$Idc = \frac{irec1}{drec} = \frac{Vm}{Vdc} \cdot \frac{Im}{2} \qquad \cdots (13)$$

[Math. 14]

9

$$\frac{Idc}{Im/\sqrt{2}} = \frac{1}{\sqrt{2}} \left( \frac{Vm}{Vdc} \right) \quad \cdots (14)$$

The correction amount Δdrec' is represented by Formula (15) by using Formula (14).

[Math. 15]

$$\Delta drec' = \frac{\dfrac{i l 0 - i l}{Im/\sqrt{2}}}{\dfrac{Idc}{Im/\sqrt{2}}} = \sqrt{2} \cdot \left( \frac{Vdc}{Vm} \right) \cdot \left( \frac{i l 0 - i l}{Im/\sqrt{2}} \right) \quad \cdots (15)$$

From Formula (7), the original first duty drec is represented as a first product. The first product is a product of a ratio (Vdc/Vm) of the DC voltage Vdc to the amplitude Vm and an absolute value |sin(ωt)| of a sine value sin(ωt) of the phase ωt.

The correction amount Δdrec' is a product of the ratio (Vdc/Vm), the value √2, and a current (il0 - il)/(Im/√2). The current (il0 - il)/(Im/√2) can be regarded as a value obtained by normalizing the current (il0 - il) by the effective value Im/√2. The current (il0 - il) is a difference between the fundamental component il0 of the current il and the current il, and can be regarded as harmonic components of the current il.

A product of the ratio (Vdc/Vm), the value √2, and a value obtained by normalizing the harmonic components of the current il by the effective value Im/√2 is descried as a second product. The first duty drec' is the sum of the original first duty drec and the correction amount Δdrec', thus, is equal to the sum of the first product and the second product.

Formula (11) is applied to Formula (15), and consequently Formula (16) is obtained.

[Math. 16]

$$\Delta drec' = \left( \frac{Vdc}{Vm} \right) \cdot \left[ \left| sin(\omega t) \right| - \sum_{n=1}^{\infty} in \cdot sin(n\omega t + \psi_n) \right]$$

$$\text{where } i_1 = 1, \quad \psi_1 = 0 \quad \cdots (16)$$

The first term |sin(ωt)| in the parentheses [] can be regarded as the absolute value of the fundamental component of the input current Iin when the crest value is equal to 1. Since there is a relationship of irec = |Iin| = irec1 - il, il0 = irec1 holds (see Formula (11)). Thus, the parentheses [] can be determined from a content of the harmonic components with respect to the fundamental component in the input current Iin. When the content of the harmonic components is 0, in = 0 holds for n ≥ 2 and thus the correction amount Δdrec' = 0 holds.

The harmonic components of the current il are directly reflected in the current irec, and consequently influence the harmonic components of the input current Iin. As a result of adopting the first duty drec', the distortion of the input current Iin from the sinusoidal wave is reduced independently from the waveform of the current il.

When the first duty drec' is adopted, the power input and output illustrated in Fig. 3 are maintained. This is advantageous from the perspective of reducing ripples of the instantaneous power Pout (= Pdc).

The original second duty dc is corrected in the following manner, and consequently the second duty dc' is obtained. The direct power converter 100 is controlled by using the second duty dc'. In view of the continuity of the current, the second duty dc' with which a relationship represented by Formula (17) holds is introduced.

[Math. 17]

$$Vc* \cdot Idc \cdot (dc' - dc) = (il - il0) \cdot Vm \cdot \left| \sin(\omega t) \right| \quad \cdots (17)$$

From Formulas (15) and (17), a correction amount $\Delta dc'$ is introduced, and consequently Formula (18) is obtained. If il = il0 holds, $\Delta dc' = 0$ and $dc' = dc$ hold.

[Math. 18]

$$dc' = dc - \Delta dc'$$

$$\Delta dc' = \Delta drec' \cdot \left( \frac{Vm}{Vc*} \right) \cdot \left| \sin(\omega t) \right| \quad \cdots (18)$$

From Formula (8), the original second duty dc is represented as a third product. Since the both-end voltage Vc follows the command value Vc*, the both-end voltage Vc and the command value Vc* are considered to be equal to each other. The third product is a product of a ratio (Vdc/Vc) of the DC voltage Vdc to the both-end voltage Vc and a square $\cos^2(\omega t)$ of a cosine value $\cos(\omega t)$ of the phase $\omega t$.

From the second equation of Formula (18), the correction amount $\Delta dc'$ is represented as a fourth product. The fourth product is a product of a ratio (Vm/Vc) of the amplitude Vm to the both-end voltage Vc, the second product that is equal to the correction amount $\Delta drec'$, and the absolute value ($|\sin(\omega t)|$) of the sine value $\sin(\omega t)$.

From the first equation of Formula (18), the second duty dc' is equal to a value obtained by subtracting the fourth product from the third product.

As a result of adopting the second duty dc', the instantaneous power Pout is smoothed and ripples are removed independently from the waveform of the current il.

The instantaneous power Pout is equal to a product Vdc·Idc, and this product Vdc·Idc is equal to the instantaneous power Pdc. Thus, Formula (19) holds with reference to Formulas (2), (9), and (11).

[Math. 19]

$$\text{Vrec} \cdot \text{drec}' + \text{Vc} \ast \cdot \text{dc}'$$

$$= \text{Vrec} \cdot \left[ \text{drec} - (\text{i l} - \text{i l0}) / \text{Idc} \right]$$

$$+ \text{Vdc} \cdot \cos(2\omega t) + (\text{i l} / \text{Idc}) \cdot \text{Vm} \cdot \left| \sin(\omega t) \right|$$

$$= \text{Vrec} \cdot \text{drec} - \text{Vrec} \cdot (\text{i l} / \text{Idc}) + \text{Vrec} \cdot (\text{i l0} / \text{Idc})$$

$$+ \text{Vdc} \cdot \cos(2\omega t) + (\text{i l} / \text{Idc}) \cdot \text{Vrec}$$

$$= \text{Vrec} \cdot \text{drec} + \text{Vdc} \left[ \cos^2(\omega t) - \sin^2(\omega t) \right]$$

$$+ \frac{\text{Vm} \cdot \left| \sin(\omega t) \right| \cdot (\text{Im}/2) \cdot \left| \sin(\omega t) \right|}{\text{Idc}}$$

$$= \text{Vrec} \cdot \text{drec} + \text{Vdc} \cdot \cos^2(\omega t)$$

$$= \text{Vdc} \qquad \qquad \cdots (19)$$

This coincides with Formula (4) and indicates that control for making the DC voltage Vdc constant can be performed by adopting the first duty drec' and the second duty dc'.

Even if the waveform of the current il does not trace the absolute values of the sinusoidal wave, power can be buffered with the harmonic components of the input current Iin being reduced.

The amplitude Im of the input current Iin and the DC current Idc are not required to obtain the original first duty drec, the original second duty dc, the correction amount Δdrec', and the correction amount Δdc'.

An example of the case where the current il includes the harmonic components will be described. Partial switching is switching for simply controlling a charge current and is publicly known in "A Simple Switching Method for A Improved Power Factor Type Single Phase Converter (Suga, Kimata, and Uchida, IEEJ Transactions on Industry Applications, Vol. 116 No. 4, pp. 420-426, 1996)" and in "Single-Phase Twice Voltage PFC Converter for Air Conditioner" (Uesgi and four others, IEEJ Transactions on Industry Applications, Vol. 119 No. 5, p. 592-598, 1999).

In accordance with the present embodiment, partial switching is adopted for switching of the switch Sl, so that the current il is controlled. For example, the switch Sl is turned ON once and OFF once in a single period of the rectified voltage Vrec (this is equal to a half-period of the single-phase AC voltage Vin). The current il continuously flows in a period shorter than a half-period of the single-phase AC voltage Vin.

In partial switching, the number of times of switching is less than that of a related-art active-buffer-based method. As a result of adopting partial switching for switching of the switch Sl, the number of times of switching reduces. The reduced number of times of switching is advantageous from the perspective of reducing the occurrence of noise caused by the switch Sl.

An amount of the distortion of the input current Iin from the sinusoidal wave is desirably reduced from the perspective of reducing power source harmonics. Thus, an operation according to the present embodiment will be described by using, as an example, the current il obtained when partial switching is adopted.

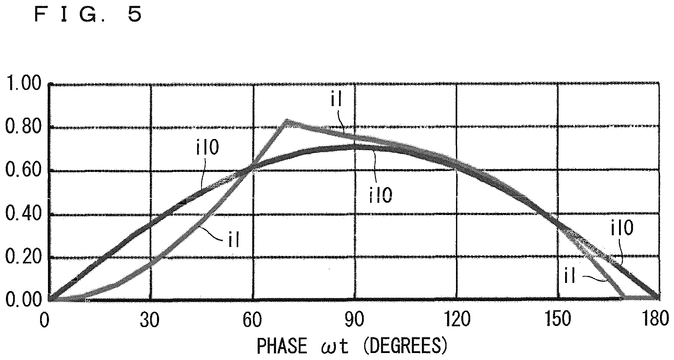

Fig. 5 is a graph illustrating a waveform of the current il obtained when partial switching is adopted. Fig. 5 illustrates a region for the phase $\omega t$ of 0 to 180 degrees. Even in a region for the phase $\omega t$ of 180 to 360 degrees, the current il has the same waveform. For reference, Fig. 5 also illustrates the waveform of the value il0. These waveforms are normalized by the effective value Im/√2.

Fig. 5 illustrates a case where the switch Sl is brought into conduction at the phase of 0 degrees and is brought out of conduction at a phase of $\omega t = \varphi$ $(0 < \varphi < 180)$ (degrees), and the switch Sl is maintained out of conduction to the phase of 180 degrees. Detailed description of the settings of the phase at which the switch SI is brought into conduction and the phase at which the switch SI is brought out of conduction is omitted, being publicly known in PTL 1 and the aforementioned literatures "A Partial Switching Method for A Improved Power Factor Type Single Phase Converter" and "Single-Phase Twice Voltage PFC Converter for Air Conditioner".

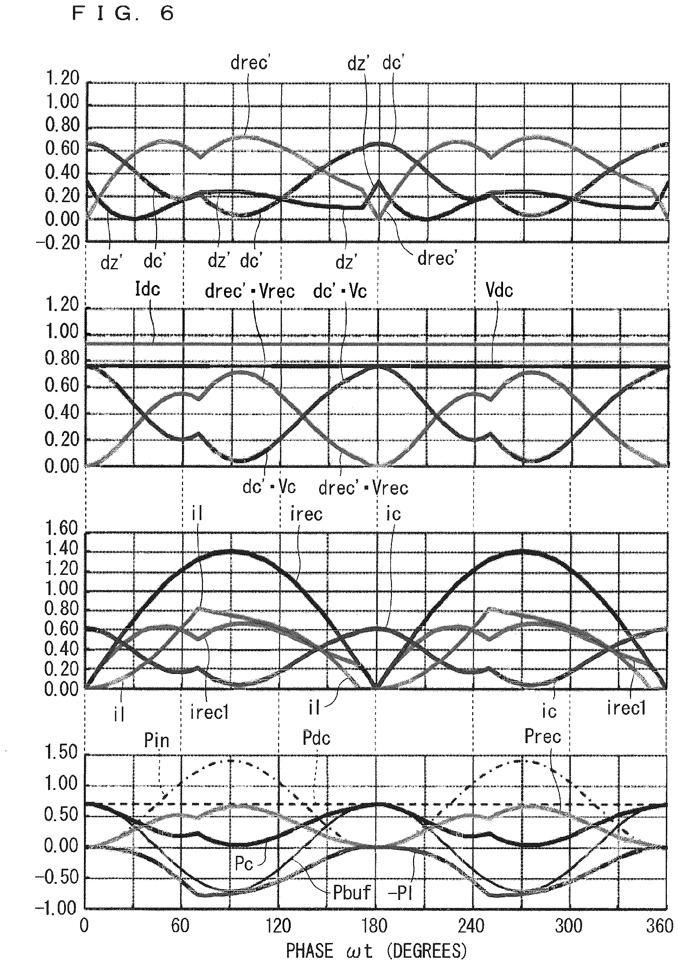

Fig. 6 depicts graphs illustrating an operation of the direct power converter 100 illustrated in Fig. 1 and illustrates the operation in the case where the first duty drec', the second duty dc', and the third duty dz' (= 1 - drec' - dc') are adopted. The waveform illustrated in Fig. 5 is adopted as the waveform of the current il.

Also in Fig. 6, the currents and the voltages are converted with the amplitude Im set to √2 and the amplitude Vm set to 1, respectively, and Vc = 1.14Vm and Vdc = 0.76Vm are set. Fig. 6 also illustrates the various quantities as in Fig. 4. Specifically, the uppermost portion illustrates the duties drec', dc', and dz'. The second portion from the top illustrates the DC voltage Vdc, the voltages drec'·Vrec and dc'·Vc (see Formula (19)) constituting the DC voltage Vdc, and the DC current Idc. The third portion from the top illustrates the currents irec, ic, il, and irec1. The lowermost portion illustrates the instantaneous powers Pin, Pdc, Pbuf, Pc, -Pl, and Prec.

Even if the current il is caused to flow to the power buffer circuit 4 by adopting partial switching, not only the instantaneous power Pdc but also the DC voltage Vdc and the DC current Idc are made constant by performing control using the first duty drec' and the second duty dc'. The waveform of the current irec traces the absolute values of the sinusoidal wave. This indicates that the input current Iin has a waveform of the sinusoidal wave.

If the DC voltage Vdc is set to be higher, a region of dz' < 0 may occur according to calculations. Detailed description of duty correction of the duties drec', dc', and dz' in such a case is omitted, being publicly known in PTL 1 and Japanese Patent No. 5794273.

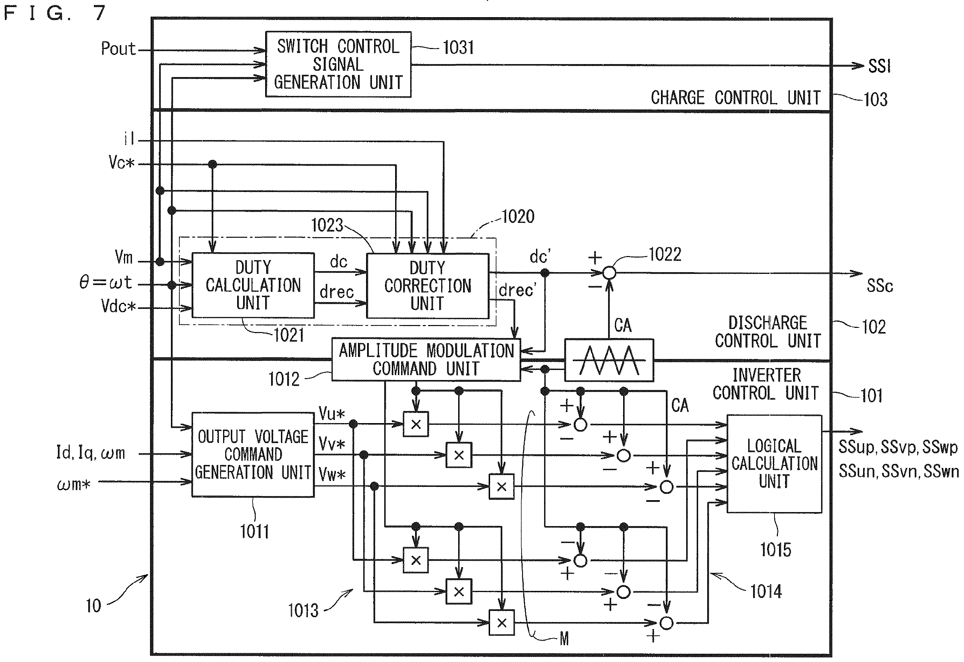

Fig. 7 is a block diagram illustrating a configuration of the control device 10. The control device 10 includes an inverter control unit 101, a discharge control unit 102, and a charge control unit 103.

The inverter control unit 101 outputs inverter control signals SSup, SSvp, SSwp, SSun, SSvn, and SSwn on the basis of the second duty dc', the first duty drec', and command values Vu*, Vv*, and Vw*.

The command values Vu*, Vv*, and Vw* are command values of voltages Vu, Vv, and Vw output by the inverter 5, respectively. The inverter control signals SSup, SSvp, SSwp, SSun, SSvn, and SSwn control operations of the switching elements Sup, Svp, Swp, Sun, Svn, Swn, respectively.

The inverter control unit 101 includes a voltage command generation unit 1011. The voltage command generation unit 1011 generates the command values Vu*, Vv*, and Vw* on the basis of the phase θ (= ωt), the q-axis current Iq, the d-axis current Id, the rotation angular velocity ωm, and the command value ωm* of the rotation angular velocity ωm.

The inverter control unit 101 further includes an amplitude modulation command unit 1012, a calculation unit 1013, a comparison unit 1014, and a logical calculation unit 1015.

The amplitude modulation command unit 1012 controls the operation of the calculation unit 1013 on the basis of the second duty dc' and the first duty drec'. The calculation unit 1013, which is illustrated as symbols for only multipliers for the sake of simplicity of illustration, performs multiply-accumulate calculation by using the command values Vu*, Vv*, and Vw*, the second duty dc', and the first duty drec' to generate a signal wave M. Detailed description of the multiply-accumulate calculation is omitted, being a public known technique.

The comparison unit 1014 compares the signal wave M with a value of a carrier CA, and outputs results of the comparison to the logical calculation unit 1015. The logical calculation unit 1015 performs logical calculation on the results and outputs the inverter control signals SSup, SSvp, SSwp, SSun, SSvn, and SSwn.

The discharge control unit 102 includes a duty calculation unit 1021, a comparator 1022, and a duty correction unit 1023.

The phase θ, the amplitude Vm, the command value Vc* of the both-end voltage Vc, and the command value Vdc* of the DC voltage Vdc are input to the duty calculation unit 1021. By using these values, the duty calculation unit 1021 determines the original first duty drec and the original second duty dc.

The duty correction unit 1023 corrects the original first duty drec by using the correction amount Δdrec' to obtain the first duty drec'. The duty correction unit 1023 corrects the original second duty dc by using the correction amount Δdc' to obtain the second duty dc'.

The DC voltage Vdc, which is required in the correction, is calculated from the original first duty drec, the original second duty dc, the amplitude Vm, the phase θ, and the command value Vc* as indicated by Formula (9). Alternatively, the command value Vdc* may be used.

The duty calculation unit 1021 and the duty correction unit 1023 can be collectively regarded as a duty generation unit 1020 that generates the second duty dc' and the first duty drec'.

The comparator 1022 compares the second duty dc' with the carrier CA to generate a switch signal SSc. The switch signal SSc controls ON and OFF of the switch Sc.

Operations of the inverter control unit 101 and the comparator 1022 are publicly known technique (for example, Japanese Patent No. 5804167 and/or Japanese Patent No. 5874800). Therefore, details of the configurations of the inverter control unit 101 and the comparator 1022 are omitted.

The charge control unit 103 includes a switch signal generation unit 1031. The switch signal generation unit 1031 generates a switch signal SSI. The switch signal SSI controls ON and OFF of the switch SI. Details of the switch signal generation unit 1031 is omitted, being publicly known in the aforementioned literatures "A Simple Switching Method for A Improved Power Factor Type Single Phase Converter" and "Single-Phase Twice Voltage PFC Converter for Air Conditioner".

For example, the switch signal generation unit 1031 generates the switch signal SSI on the basis of the instantaneous power Pout and the amplitude Vm.

{E. In Case where Current il Includes Harmonic Components (II)}

The original first duty drec is corrected in the following manner, and consequently a first duty drec" is obtained. The direct power converter 100 is controlled by using the first duty drec". A correction amount il' is at least part of the harmonic components of the current il and has a dimension of the current. In the current il, the correction amount il' is at least one frequency component among frequencies desired to be reduced in the input current Iin and is at least part of that component. That is, unlike {D. In Case where Current il Includes Harmonic Components (I)}, a desired quantity of a desired frequency component of the harmonic components of the current il is expected to be reduced.

Formula (20) is obtained by systematically replacing the first duty drec' and the current (il0 - il) in Formula (12) with the first duty drec" and the correction amount il', respectively.

[Math. 20]

$$\mathrm{drec}'' = \mathrm{drec} + \left( \frac{\mathrm{il}'}{\mathrm{Idc}} \right)$$

$$= \frac{\mathrm{Vdc}}{\mathrm{Vm}} \cdot \left| \sin(\omega t) \right| + \left( \frac{\mathrm{il}'}{\mathrm{Idc}} \right) \qquad \cdots (20)$$

The second term (il'/Idc) on the right side of the second equation of Formula (20) denotes a correction amount Δdrec" for the original first duty drec. That is, drec" = drec + Δdrec" holds. If il' = 0 holds, drec" = drec and Δdrec" = 0 hold. This corresponds to "C. In Case where Current il is Sinusoidal Wave." described above.

Formula (21) is obtained in a manner similar to that of Formulas (15) and (16). Note that n ≥ 2 unlike Formula (16).

[Math. 21]

$$\Delta \mathrm{drec}'' = \sqrt{2} \cdot \left( \frac{\mathrm{Vdc}}{\mathrm{Vm}} \right) \cdot \frac{\mathrm{il}'}{\mathrm{Im}/\sqrt{2}}$$

$$= \left( \frac{\mathrm{Vdc}}{\mathrm{Vm}} \right) \cdot \mathrm{in} \cdot \sin(n\omega t + \psi) \qquad \cdots (21)$$

The correction amount Δdrec" is a product of the ratio (Vdc/Vm), the value √2, and a current (il')/(Im/√2). The current (il')/(Im/√2) can be regarded as a value obtained by normalizing the correction amount il' by the effective value Im/√2. Thus, the correction amount Δdrec" can also be regarded as the second product, and the first duty drec" is also equal to the sum of the first product and the second product.

Likewise, Formula (22) is obtained by systematically replacing the second duty dc' and the current (il0 - il) in Formula (17) with the second duty dc" and a value (-il'), respectively.

[Math. 22]

$$\mathrm{Vc}* \cdot \mathrm{Idc} \cdot (\mathrm{dc}'' - \mathrm{dc}) = -\mathrm{il}' \cdot \mathrm{Vm} \cdot \left| \sin(\omega t) \right| \qquad \cdots (22)$$

Formula (23) is obtained for as a correspondence to Formula (18).

[Math. 23]

$$dc'' = dc - \Delta dc''$$

$$\Delta dc'' = \Delta drec'' \cdot \left( \frac{Vm}{Vc*} \right) \cdot \left| \sin(\omega t) \right| \quad \cdots (23)$$

From Formula (23), the correction amount $\Delta dc''$ is also a product of the ratio (Vm/Vc) of the amplitude Vm to the both-end voltage Vc, the second product, and the absolute value ($|\sin(\omega t)|$) of the sine value $\sin(\omega t)$. Thus, the correction amount $\Delta dc''$ can also be regarded as the fourth product. The second duty $dc''$ is also equal to a value obtained by subtracting the fourth product from the third product like the second duty $dc'$.

Formula (24) is obtained from Formulas (8) and (22).

[Math. 24]

$$dc'' = dc - \frac{\left( \frac{il'}{Idc} \right) \cdot Vm \cdot \left| \sin(\omega t) \right|}{Vc*}$$

$$= \frac{Vdc}{Vc*} \cdot \cos^2(\omega t) - \left( \frac{il'}{Idc} \right) \cdot \left( \frac{Vm}{Vc*} \right) \cdot \left| \sin(\omega t) \right|$$

$$\cdots (24)$$

Formula (25) is obtained by performing substantially the same calculation as represented by Formula (19) by using the first duty $drec''$ and the second duty $dc''$ thus obtained. This indicates that control for making the DC voltage Vdc constant can be performed by adopting the first duty $drec''$ and the second duty $dc''$.

[Math. 25]

$$\mathsf{Vrec \cdot drec''+Vc* \cdot dc''}$$

$$= \mathsf{Vrec \cdot \left[ drec+il'/Idc \right]}$$

$$+\mathsf{Vdc \cdot cos^2(\omega t) - (il'/Idc) \cdot Vm \cdot \left| sin(\omega t) \right|}$$

$$= \mathsf{Vrec \cdot drec+Vrec \cdot (il'/Idc)}$$

$$+\mathsf{Vdc \cdot cos^2(\omega t) - (il'/Idc) \cdot Vrec}$$

$$= \mathsf{Vrec \cdot drec+Vdc \cdot cos^2(\omega t)}$$

$$+\left( \frac{\mathsf{il'}}{\mathsf{Idc}} \right) \left[ \mathsf{Vrec - Vm \cdot \left| sin(\omega t) \right|} \right]$$

$$= \mathsf{Vrec \cdot drec+Vdc \cdot cos^2(\omega t)}$$

$$= \mathsf{Vdc} \qquad\qquad \cdots (25)$$

Even if the waveform of the current il does not trace the absolute values of the sinusoidal wave, power can be buffered with the harmonic components of the input current Iin being reduced.

The amplitude Im of the input current Iin and the DC current Idc are not required to obtain the original first duty drec, the original second duty dc, the correction amount Δdrec", and the correction amount Δdc".

Since the correction amounts Δdrec" and Δdc" are based on the correction amount il', the desired quantity of the desired frequency component of the harmonic components of the current il can be reduced.

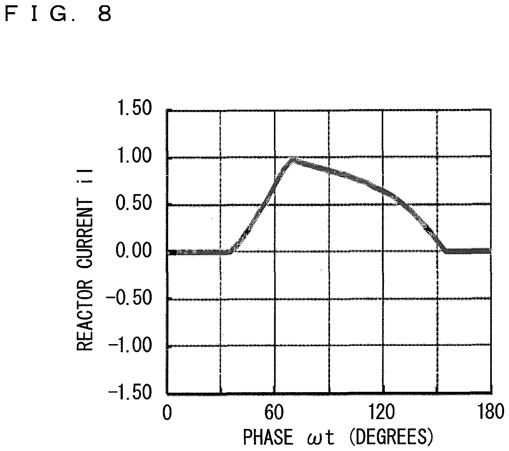

Fig. 8 is a graph illustrating the waveform of the current il. Fig. 8 illustrates a region of a half-period of the single-phase AC voltage Vin, specifically, a region of the phase ωt of 0 to 180 degrees. Even in a region for the phase ωt of 180 to 360 degrees, the current il has the same waveform. The current il normalized by the effective value Im/√2 is illustrated.

The phase at which the switch Sl transitions from non-conduction to conduction is about 36 degrees. The phase at which the switch Sl transitions from conduction to non-conduction is about 68 degrees. At this phase, the current il takes the largest value. The current il decreases thereafter as the phase increases. The current il becomes equal to 0 at about 155 degrees.

Since full-wave rectification is performed in the present embodiment, the switch Sl is in conduction when the phase is from about 216 (= 36 + 180) degrees to about 248 (= 68 + 180) degrees. Thus, the current il flows when the phase is from about 216 degrees to about 335 (= 155 + 180) degrees and takes the largest value at the phase of about 248 (= 68 + 180) degrees.

For example, IEC 61000-3-2, which is a standard for regulating the harmonics, permits the 3rd harmonic component up to an effective value of 2.30 A in the input current Iin under the condition of the rated voltage of 230 V. If the current il having the waveform illustrated in Fig. 7 is caused to flow, the effective value of the 3rd harmonic component of the input current Iin is 2.87 A when the effective voltage value is 230 V. Thus, to make the 3rd harmonic component of the input current Iin within the permissible value defined by IEC 61000-3-2, a value equivalent to a current of 0.571 (= 2.87 - 2.30) A of the 3rd harmonic component is adopted as the correction amount il'.

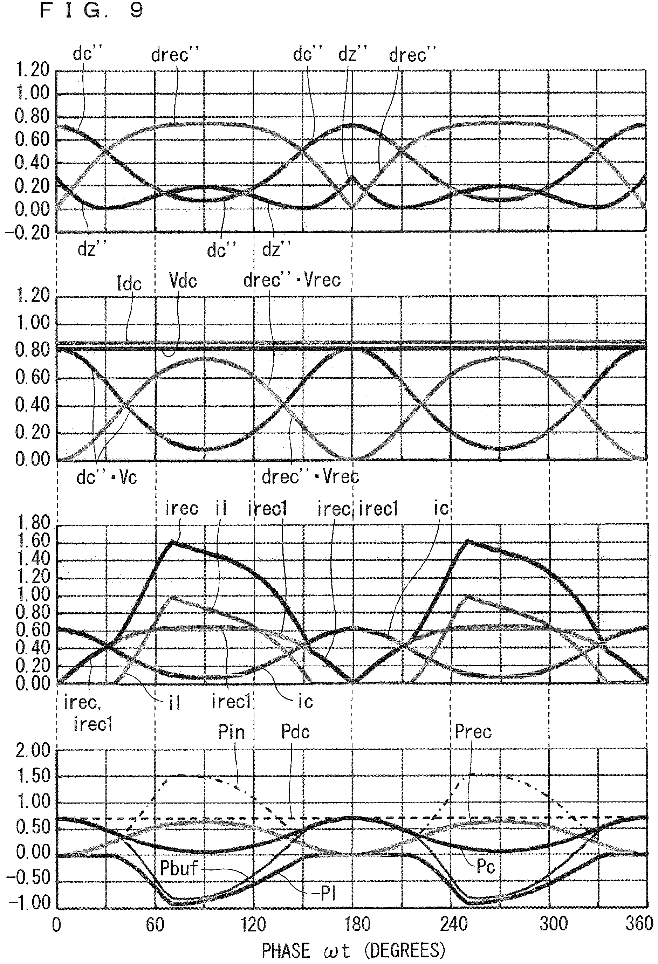

Fig. 9 depicts graphs illustrating an operation of the direct power converter 100 in the case where the first duty drec", the second duty dc", and "third duty dz" are set when such a correction amount il' is adopted. dz" = 1 - drec" - dc" holds. Also in Fig. 9, the currents and the voltages are converted with the amplitude Im set to √2 and the amplitude Vm set to 1, respectively, and Vc = 1.14Vm is set. Note that Vdc = 0.82Vm is set.

Fig. 9 also illustrates the various quantities as in Fig. 6. Specifically, the uppermost portion illustrates the duties drec", dc", and dz". The second portion from the top illustrates the DC voltage Vdc, the voltages drec"·Vrec and dc"·Vc constituting the DC voltage Vdc, and the DC current Idc. The third portion from the top illustrates the currents irec, ic, il, and irec1. The lowermost portion illustrates the instantaneous powers Pin, Pdc, Pbuf, Pc, -Pl, and Prec. By setting Vdc = 0.82Vm, the smallest value of the third duty dz" can be made equal to 0 instead of a positive value.

The distortion of the waveform of the current il illustrated in Fig. 7 is greater than that of the current il illustrated in Fig. 5. Control is performed based only on a desired amount (value equivalent to the current of 0.571 A) of a harmonic component (3rd harmonic component in this case) of a particular frequency in the operation illustrated in Fig. 9, whereas control for reducing all the harmonic components is performed in the operation illustrated in Fig. 6. As a result of such a difference in control, the DC voltage Vdc that is higher than the DC voltage (Vdc = 0.76Vm in accordance with Fig. 6) obtained by the control using the first duty drec' and the second duty dc' is more likely to be obtained as the DC voltage Vdc (Vdc = 0.82Vm in accordance with Fig. 9) obtained by the control using the first duty drec" and the second duty dc".

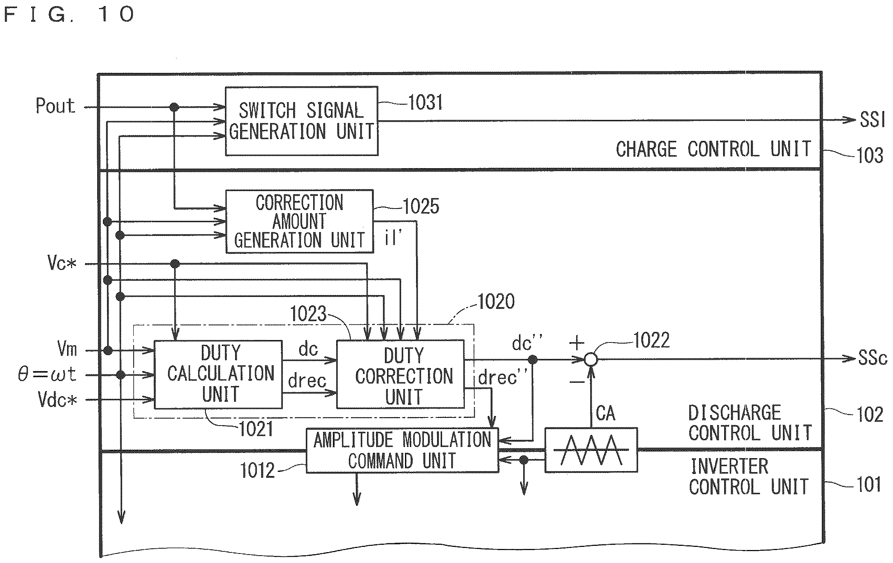

Fig. 10 is a block diagram illustrating a first configuration of the discharge control unit 102 for obtaining the first duty drec" and the second duty dc" and components therearound. Such a discharge control unit 102 also constitutes the control device 10 along with the inverter control unit 101 and the charge control unit 103 illustrated in Fig. 7.

In Fig. 10, the discharge control unit 102 includes a correction amount generation unit 1025 in addition to the duty calculation unit 1021, the comparator 1022, and the duty correction unit 1023 described using Fig. 7. The correction amount il' is input to the duty correction unit 1023 in place of the current il. The duty correction unit 1023 corrects the original first duty drec by using the correction amount Δdrec" to obtain the first duty drec". The duty correction unit 1023 corrects the original second duty dc by using the correction amount Δdc" to obtain the second duty dc".

The correction amount generation unit 1025 generates the correction amount il' to be reduced on the basis of the relationship between the input current Iin and the permissible amount of the harmonic component, and outputs the correction amount il'. For example, a table that determines the permissible value for the magnitude of the input current Iin is stored in the correction amount generation unit 1025.

The correction amount generation unit 1025 is capable of calculating the input current Iin on the basis of the instantaneous power Pout, the amplitude Vm, and the phase ωt. For example, Formula (26) can be adopted.

[Math. 26]

$$Is = \frac{2 \cdot Pout}{Vm \cdot \left| \sin(\omega t) \right|} \quad \cdots (26)$$

Detailed description of such a first configuration is omitted, being publicly known due to, for example, PTL 1. In the first configuration, the correction amount il' is determined on the basis of the distortion of the input current Iin. Thus, in the first configuration, the control device 10 does not require the current il.

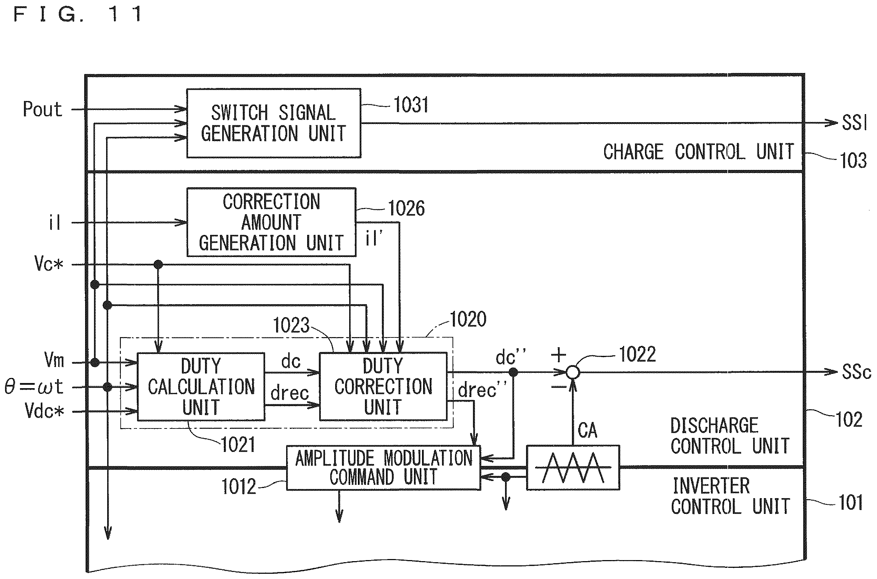

Fig. 11 is a block diagram illustrating a second configuration of the discharge control unit 102 for obtaining the first duty drec" and the second duty dc" and components therearound. Such a discharge control unit 102 also constitutes the control device 10 along with the inverter control unit 101 and the charge control unit 103 illustrated in Fig. 7.

In Fig. 11, the discharge control unit 102 includes a correction amount generation unit 1026 in addition to the duty calculation unit 1021, the comparator 1022, and the duty correction unit 1023 described using Fig. 7. The correction amount il' is input to the duty correction unit 1023 in place of the current il. The duty correction unit 1023 corrects the original first duty drec by using the correction amount Δdrec" to obtain the first duty drec". The duty correction unit 1023 corrects the original second duty dc by using the correction amount Δdc" to obtain the second duty dc".

The correction amount generation unit 1026 performs fast Fourier transform on the current il to determine an amplitude Ilh(n) for each of the n-th frequency components thereof. The order of a harmonic exceeding a permissible value set for the corresponding order is selected. For the selected order (hereinafter, referred to as α-th), an amount by which the amplitude Ilh(α) of the α-th harmonic component exceeds the permissible value set for the α-th harmonic is determined as the correction amount Il'(α) for the α-th harmonic. The correction amount Il'(β) (β ≠ α) for the order not selected is set to 0. Inverse fast Fourier transform is performed using the correction amount Il'(n) or the correction amount Il'(α), and consequently the correction amount il' is determined.

Detailed description of such a second configuration is omitted, being publicly known due to, for example, PTL 1. In the second configuration, the correction amount il' is determined on the basis of the distortion of the current il.

In above-described derivation of each of the first duties drec' and drec" and the second duties dc' and dc", it is not assumed that the distortion of the current il results from partial switching. Thus, obviously, the techniques using the first duties drec' and drec" and the second duties dc' and dc" do not assume partial switching.

From Formula (7), the original first duty drec is represented as the first product. The first product is the product of the ratio (Vdc/Vm) of the DC voltage Vdc to the amplitude Vm and the absolute value |sin(ωt)| of the sine value sin(ωt)

of the phase $\omega t$.

The correction amounts $\Delta drec'$ and $\Delta drec''$ are each represented as the second product. With reference to Formulas (12) and (20), the second product is a product of the ratio (Vdc/Vm), the value $\sqrt{2}$, and the predetermined current.

The first duty drec' is the sum of the original first duty drec and the correction amount $\Delta drec'$. The first duty drec'' is the sum of the original first duty drec and the correction amount $\Delta drec''$. Thus, each of the first duties drec' and drec'' is equal to the sum of the first product and the second product.

Note that the predetermined current is a current obtained by normalizing at least part of a harmonic component of the current il or the difference (il0 - il) between the fundamental component il0 of the current il and the current il by the effective value ($Im/\sqrt{2}$) of the input current Iin.

When the predetermined current is the current obtained by normalizing at least part of a harmonic component of the current il by the effective value ($Im/\sqrt{2}$), the correction amount $\Delta drec''$ is equal to the second product. When the predetermined current is the current obtained by normalizing the difference (il0 - il) between the fundamental component il0 of the current il and the current il by the effective value ($Im/\sqrt{2}$), the correction amount $\Delta drec'$ is equal to the second product. Thus, the second product generally represents each of the correction amounts $\Delta drec'$ and $\Delta drec''$.

By adopting the first duty drec' or drec'' in place of the original first duty drec, the distortion of the waveform of the input current Iin from the sinusoidal wave is reduced.

From Formulas (18) and (23), each of the second duties dc' and dc'' is equal to a value obtained by subtracting the fourth product from the third product. The third product is the product of the ratio (Vdc/Vc) of the DC voltage Vdc to the both-end voltage Vc (or the command value Vc* thereof) and the square $\cos^2(\omega t)$ of the cosine value $\cos(\omega t)$ of the phase $\omega t$. The fourth product is the product of the ratio (Vm/Vc) of the amplitude Vm to the both-end voltage Vc, the second product, and the absolute value $|\sin(\omega t)|$ of the sine value $\sin(\omega t)$ of the phase $\omega t$.

As described above, the second product generally represents each of the correction amounts $\Delta drec'$ and $\Delta drec''$. When the second product corresponds to the correction amount $\Delta drec'$, the fourth product is equal to the correction amount $\Delta dc'$ and the third product and the fourth product are equal to the second duty dc'. When the second product corresponds to the correction amount $\Delta drec''$, the fourth product is equal to the correction amount $\Delta dc''$ and the third product and the fourth product are equal to the second duty dc''.

Adopting the second duty dc' or dc'' in place of the original second duty dc is advantageous from the perspective of reducing ripples in the instantaneous power Pout output by the inverter 5.

In consideration of irec = irec1 + il and Formulas (11), (15), and (16), the current (il0 - il) can be determined by a content of the harmonic components included in the input current Iin with respect to the fundamental wave of the input current.

Likewise, the correction amount il' is a content of at least part of at least one frequency component of the harmonic components included in the current il with respect to the fundamental wave of the input current Iin.

The original first duty drec can be determined by using the first product. The correction amount $\Delta drec'$ or $\Delta drec''$ can be determined by using the second product. The original second duty dc can be determined by using the third product. The correction amount $\Delta dc'$ or $\Delta dc''$ can be determined by using the fourth product. In the above-described example, the first product and the third product are obtained by the duty calculation unit 1021, and the second product and the fourth product are obtained by the duty correction unit 1023.

The switch SI can be turned ON once and OFF once in a single period of the rectified voltage Vrec (this is also a half-period of the AC voltage Vin), so that the switch SI can be caused to perform partial switching. Partial switching involves a less number of times of switching and thus is advantageous from the perspective of reducing switching noise. In the above-described example, the switch signal SSI for turning ON and OFF the switch SI is generated by the switch signal generation unit 1031.

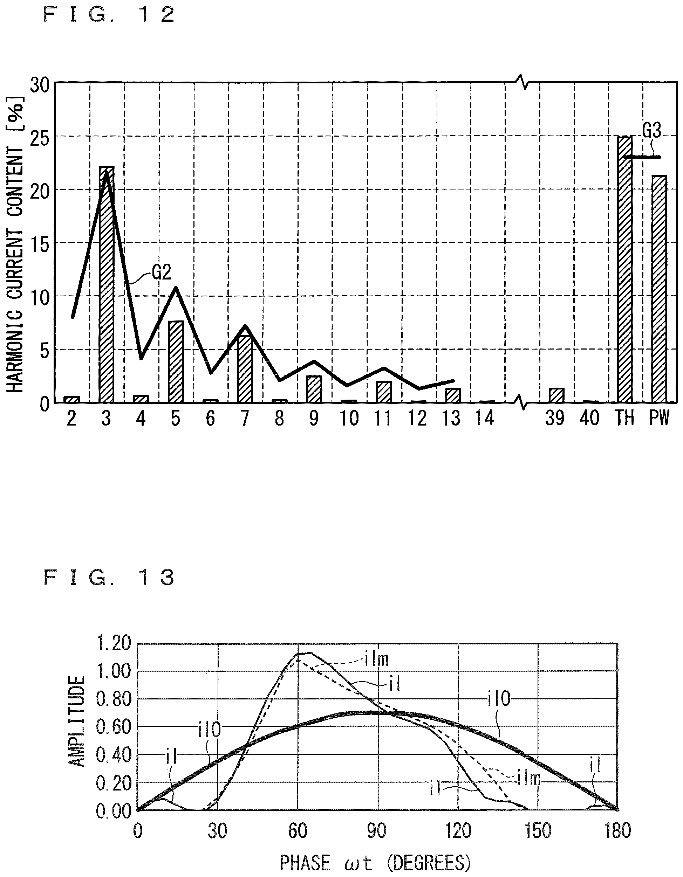

Fig. 12 is a graph illustrating spectra of the harmonics of the input current Iin when the current il illustrated in Fig. 13 flows. The horizontal axis represents the orders (except for the 1st harmonic which corresponds to the fundamental component), and the harmonic components are represented by bars.

As a standard for regulating the harmonics, IEC 61000-3-12 is known in addition to IEC 61000-3-2 mentioned above. Fig. 12 illustrates spectra in view of IEC 61000-3-12.

Fig. 13 is a graph illustrating the waveform of the current il with which the spectra illustrated in Fig. 12 are obtained. Fig. 13 illustrates a region for the phase $\omega t$ of 0 to 180 degrees. Even in a region for the phase $\omega t$ of 180 to 360 degrees, the current il has the same waveform. For reference, Fig. 13 also illustrates the waveform of the value il0. These waveforms are normalized by the effective value $Im/\sqrt{2}$.

IEC 61000-3-12 defines permissible values (upper limits) for harmonic components up to the 13-th harmonic component. The permissible values are represented by a zigzag line G2 in Fig. 12. Note that the vertical axis represents a content of the harmonic current with respect to the fundamental component. Thus, the permissible values, converted into the contents with respect to the fundamental component of the input current Iin, are illustrated. This conversion is conversion based on IEC 61000-3-12 Edition 2.0 (2004) instead Edition 1.0 (2011).

IEC 61000-3-12 Edition 1.0 defines permissible values (upper limits) for the total harmonic distortion (denoted by TH in Fig. 12) and the partial weighted harmonic distortion (denoted by PW in Fig. 12) of the current. In Fig. 12, these permissible values are illustrated by a straight line G3. Since the permissible value for the total harmonic distortion and the permissible value for the partial weighted harmonic distortion are equal to each other, the straight line G3 is not a zigzag line.

The value represented by the zigzag line G2 and the value represented by the straight line G3 are permissible values in the case where a short circuit ratio is equal to 33.

As is apparent from Fig. 12, the 3rd harmonic and the total harmonic distortion exceed the permissible values defined by IEC 61000-3-12. The partial weighted harmonic distortion is below the permissible value defined by IEC 61000-3-12. The partial weighted harmonic distortion is calculated based on the 14-th to 40-th harmonic components. Thus, discussion is given by excluding the 14-th to 40-th harmonic components from the orders of the harmonic components to be reduced in the current il.

An approximate waveform ilm is determined by calculation reconstructed using the fundamental component and the 2nd to 13th harmonic components of the current il from the perspective of this order exclusion. Fig. 13 also illustrates the approximate waveform ilm.

"in" (where n = 3) in Formula (21) is set such that the 3rd harmonic component of the input current Iin when such a waveform is adopted as the current il satisfies the permissible value defined by IEC 61000-3-12. For example, the 3rd harmonic component of the input current Iin is 106.3% of the permissible value defined by IEC 61000-3-12 for the 3rd harmonic component. Thus, the 3rd harmonic component of the current il is reduced by a reduction value greater than or equal to a current equivalent to 6.3% of the permissible value. The total harmonic distortion is based on the 2nd to 40th harmonic components. Thus, the 3rd harmonic component of the current il can be reduced such that the total harmonic distortion of the input current Iin satisfies the permissible value defined by IEC 61000-3-12 as a result of the reduction of the 3rd harmonic component of the current il.

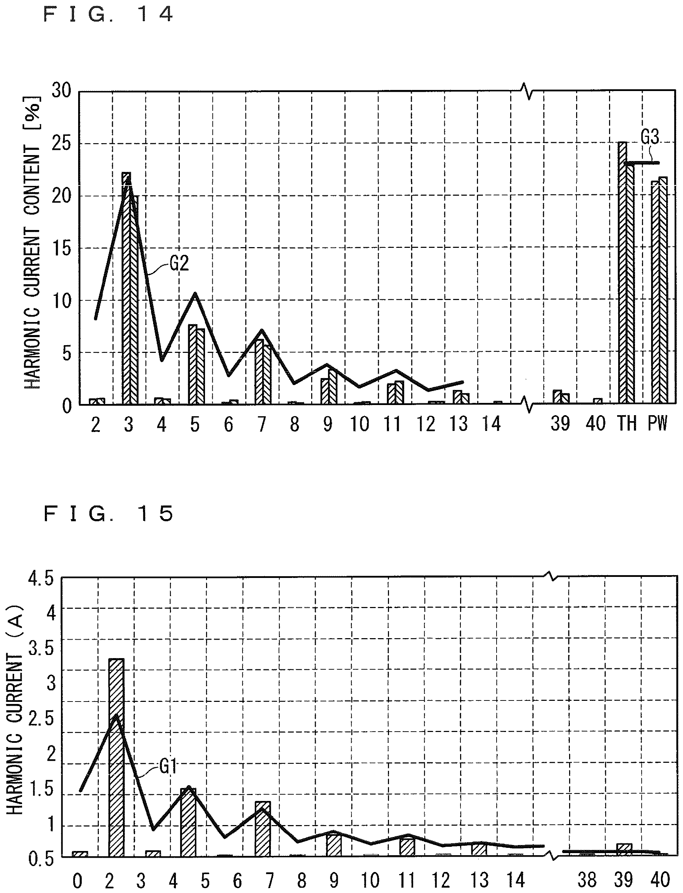

Fig. 14 is a graph illustrating spectra of harmonics of the input current Iin. Fig. 14 illustrates bars in the case where the 3rd harmonic component of the current il illustrated in Fig. 13 is reduced by the current value equivalent to 7.2% of the permissible value defined by IEC 61000-3-12 in addition to bars illustrated in Fig. 12. Two bars for the same order are illustrated side by side. The bar on the left side represents the case illustrated in Fig. 12, and the bar on the right side represents the case where the 3rd harmonic component is reduced.

The 3rd harmonic component of the input current Iin represented by the bar on the right side is lower than the permissible value defined by IEC 61000-3-12. The total harmonic distortion of the input current Iin represented by the bar on the right side satisfies the permissible value defined by IEC 61000-3-12.

A plurality of orders of the harmonic components of the current il may be reduced. Fig. 15 is a graph illustrating spectra of the harmonics of the input current Iin when the current il illustrated in Fig. 13 flows. The horizontal axis represents the orders (except for the 1st harmonic which corresponds to the fundamental component), and the harmonic components are represented by bars.

Unlike Fig. 12, Fig. 15 illustrates spectra in view of IEC 61000-3-2. IEC 61000-3-2 defines permissible values (upper limits) of harmonic components up to the 40-th harmonic component. The permissible values are represented by a zigzag line G1 in Fig. 15. Note that the vertical axis denotes the harmonic current.

The 3rd and 7th harmonic components of the input current Iin exceed the permissible values defined by IEC 61000-3-2. Thus, these are desirably reduced. Note that since the vertical axis represents the harmonic current, the permissible values converted into the current values in consideration of the fundamental component of the input current Iin are illustrated.

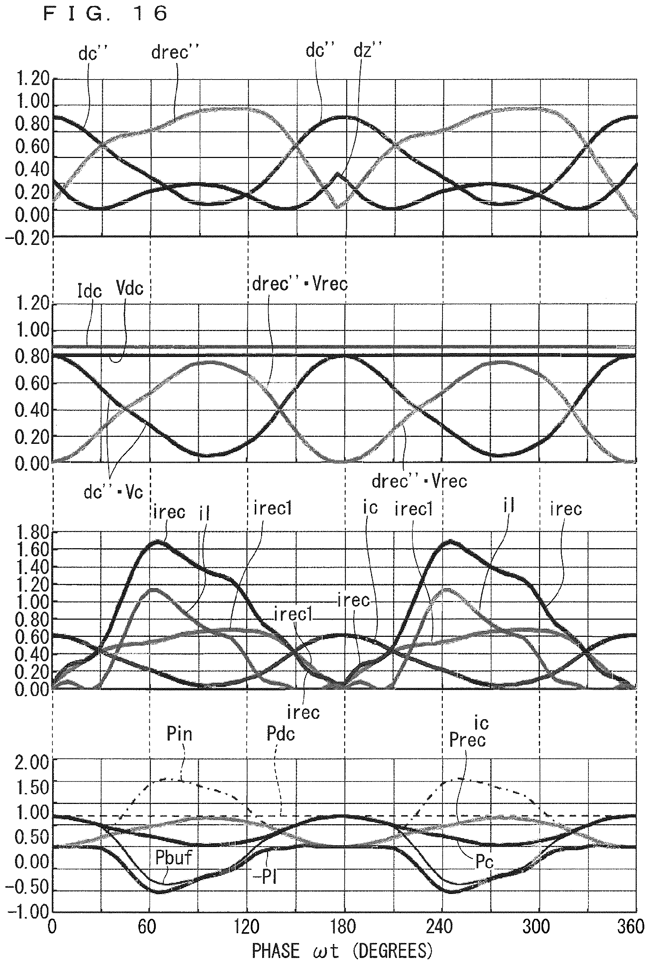

Fig. 16 depicts graphs illustrating an operation of the direct power converter 100. Fig. 16 illustrates the case where the first duty drec", the second duty dc", and the third duty dz" are set with which the 3rd and 7th harmonic components of the current il are reduced such that the 3rd and 7th harmonic components of the input current Iin satisfy the permissible values defined by IEC 61000-3-2.

Also in Fig. 16, the currents and the voltages are converted with the amplitude Im set to $\sqrt{2}$ and the amplitude Vm set to 1, respectively, and Vc = 1.14Vm is set. Note that Vdc = 0.81 Vm is set.

Fig. 16 also illustrates the various quantities as in Figs. 6 and 9. Specifically, the uppermost portion illustrates the duties drec", dc", and dz". The second portion from the top illustrates the DC voltage Vdc, the voltages drec"·Vrec and dc"·Vc constituting the DC voltage Vdc, and the DC current Idc. The third portion from the top illustrates the currents irec, ic, il, and irec1. The lowermost portion illustrates the instantaneous powers Pin, Pdc, Pbuf, Pc, -Pl, and Prec. By setting Vdc = 0.81Vm, the smallest value of the third duty dz" can be made equal to 0 instead of a positive value.

As described above, by adopting the first duty drec' or drec" in place of the original first duty drec, the distortion of the waveform of the input current Iin from the sinusoidal wave is reduced. Adopting the second duty dc' or dc" in place of the original second duty dc is advantageous from the perspective of reducing ripples in the instantaneous power Pout output by the inverter 5.

Since the correction amounts Δdrec" and Δdc" are based on the correction amount il', the desired quantity of the desired frequency component of the harmonic components of the current il can be reduced.

The amplitude Im of the input current Iin and the DC current Idc are not required to obtain the original first duty drec and the original second duty dc as indicated by Formulas (7) and (8). In consideration of the various quantities normalized by the effective value Im/√2 of the input current Iin, the correction amounts Δdrec', Δdc', Δdrec", and Δdc" are obtained without using the amplitude Im and the DC current Idc as indicated by Formulas (16), (18), (21), and (23) .

As described above, since drec' = drec + Δdrec', dc' = dc - Δdc', drec" = drec + Δdrec", and dc" = dc - Δdc" hold, the amplitude Im and the DC current Idc are not required to set the first duties drec' and drec" and the second duties dc' and dc". This is desirable from the perspective of omitting the current sensor and enabling a reduction in the number of components required in control of the direct power converter 100.

Performing partial switching by turning the switch SI ON once and OFF once in a half-period of the AC voltage Vin is advantages from the perspective of reducing switching noise by a reduced number of times of switching.

While the embodiment has been described above, it should be understood that various modifications can be made on the configurations and details without departing from the gist and the scope of the claims. The various embodiment and modifications described above can be combined with each other.

## Claims

1. A control device (10) for a direct power converter (100), the control device being configured to control the direct power converter,

   the direct power converter including
   a DC link (7),
   a converter (3) that rectifies a single-phase AC voltage (Vin), converts AC power into DC power, and outputs first instantaneous power (Pin),
   a power buffer circuit (4) that receives and supplies power between the converter and the DC link and buffers second instantaneous power (Pbuf), and
   an inverter (5) that converts a DC voltage in the DC link into an AC voltage and outputs the AC voltage,
   the control device comprising:

   a duty generation unit (1020) that generates a first duty (drec', drec") and a second duty (dc', dc"), the first duty being a duty in which a first current (irec1) flows from the converter to the DC link, the second duty being a duty in which a second current (ic) flows from the power buffer circuit to the DC link; and
   an inverter control unit (101) that outputs an inverter control signal (SSup, SSvp, SSwp, SSun, SSvn, SSwn) for controlling an operation of the inverter, on the basis of the first duty, the second duty, and a command value (Vu*, Vv*, Vw*) of a voltage output by the inverter,
   wherein the first duty is equal to a sum of a first product and a second product,
   wherein the first product is a product of a first ratio (Vdc/Vm) of a predetermined voltage (Vdc) to an amplitude (Vm) of the single-phase AC voltage and an absolute value (|sin(ωt)|) of a sine value of a phase (ωt) of the single-phase AC voltage,
   wherein the second product is a product (√2·(il0 - il)·(Vdc/Vm), √2·il'·(Vdc/Vm)) of a third current (il0 - il, il'), the first ratio, and a value √2, and
   wherein the third current is a current obtained by normalizing at least part of a harmonic component (il') of a fourth current (il) input to the power buffer circuit from the DC link or a difference (il0 - il) between a fundamental component of the fourth current and the fourth current by an effective value (Im/√2) of an input current (Iin) input to the converter (3).

2. The control device for a direct power converter according to Claim 1,

   wherein the power buffer circuit (4) includes
   a discharge circuit (4a) including a capacitor (C4) and a first switch (Sc, D42) that connects the capacitor to the DC link, and
   a charge circuit (4b) that charges the capacitor, and
   wherein the control device
   outputs a first switch signal (SSc) for bringing the first switch into conduction, on the basis of the second duty (dc', dc"),
   wherein the second duty is equal to a value obtained by subtracting a fourth product from a third product,
   wherein the third product is a product of a second ratio (Vdc/Vc) of the predetermined voltage (Vdc) to a both-end voltage (Vc, Vc*) and a square (cos²(ωt)) of a cosine value of the phase (ωt) of the single-phase AC voltage, the both-end voltage being a voltage across the capacitor, and
wherein the fourth product is a product of a third ratio (Vm/Vc) of the amplitude (Vm) to the both-end voltage, the second product ($\sqrt{2}\cdot$(il0 - il)$\cdot$(Vdc/Vm), $\sqrt{2}\cdot$il'$\cdot$(Vdc/Vm)), and the absolute value (|sin($\omega$t)|) of the sine value.

3. The control device for a direct power converter according to Claim 2, wherein the third current (il0 - il) is determined from a content of harmonic components included in the input current (Iin) with respect to a fundamental of the input current.

4. The control device for a direct power converter according to Claim 2, wherein the third current (il') is a content of at least part of at least one frequency component of harmonic components included in the fourth current (il) with respect to a fundamental of the input current (Iin).

5. The control device for a direct power converter according to any one of Claims 2 to 4,

wherein the duty generation unit includes
a duty calculation unit (1021) that obtains an original first duty (drec) by using the first product and obtains an original second duty (dc) by using the third product, and
a duty correction unit (1023) that obtains the first duty (drec', drec") from the second product and the original first duty and obtains the second duty (dc', dc") from the fourth product and the original second duty.

6. The control device for a direct power converter according to any one of Claims 2 to 5,

wherein the charge circuit (4b) includes
a reactor (L4) that accumulates energy in the capacitor (C4), and
a second switch (Sl, D41) that connects the converter (3) to the reactor and causes the reactor to accumulate energy, and
wherein the control device further comprises:
a switch signal generation unit (1031) that generates a second switch signal (SS1) for turning the second switch ON once and OFF once in a half-period of the single-phase AC voltage (Vin).

F I G. 1

EP 3 940 944 A1

F I G. 2

F I G. 3

FIG. 4

F I G. 5

FIG. 6

FIG. 7

F I G. 8

EP 3 940 944 A1

FIG. 9

PHASE $\omega t$ (DEGREES)

29

F I G. 1 0

EP 3 940 944 A1

F I G.  1 1

EP 3 940 944 A1

FIG. 12

FIG. 13

F I G. 1 4

F I G. 1 5

FIG. 16

## INTERNATIONAL SEARCH REPORT

| International application No. |
| --- |
| PCT/JP2020/010174 |

**A. CLASSIFICATION OF SUBJECT MATTER**
H02M 7/12(2006.01)i; H02M 7/48(2007.01)i
FI: H02M7/48 Y; H02M7/12 Q
According to International Patent Classification (IPC) or to both national classification and IPC

**B. FIELDS SEARCHED**

Minimum documentation searched (classification system followed by classification symbols)
H02M7/12; H02M7/48

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-61422 A (DAIKIN INDUSTRIES, LTD.) 12.04.2018 (2018-04-12) | 1–6 |
| A | JP 2015-76921 A (DAIKIN INDUSTRIES, LTD.) 20.04.2015 (2015-04-20) entire text, all drawings | 1–6 |
| A | JP 2015-84637 A (DAIKIN INDUSTRIES, LTD.) 30.04.2015 (2015-04-30) entire text, all drawings | 1–6 |
| A | JP 2016-82680 A (DAIKIN INDUSTRIES, LTD.) 16.05.2016 (2016-05-16) entire text, all drawings | 1–6 |
| A | JP 2011-193678 A (NAGAOKA UNIVERSITY OF TECHNOLOGY) 29.09.2011 (2011-09-29) entire text, all drawings | 1–6 |

☐ Further documents are listed in the continuation of Box C.  ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 June 2020 (05.06.2020) | 16 June 2020 (16.06.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2020/010174 |

| Patent Documents referred in the Report | Publication Date | Patent Family | Publication Date |
| --- | --- | --- | --- |
| JP 2018-61422 A | 12 Apr. 2018 | US 2019/0222135 A1<br>WO 2018/062261 A1<br>EP 3522355 A1<br>CN 109874384 A | |
| JP 2015-76921 A | 20 Apr. 2015 | US 2016/0248335 A1<br>WO 2015/053271 A1<br>EP 3057223 A1<br>CN 105637754 A | |
| JP 2015-84637 A | 30 Apr. 2015 | US 2016/0294300 A1<br>WO 2015/041111 A1<br>EP 3048718 A1<br>CN 105556817 A | |
| JP 2016-82680 A | 16 May 2016 | US 2017/0310235 A1<br>WO 2016/060039 A1<br>EP 3208929 A1<br>CN 107078658 A | |
| JP 2011-193678 A | 29 Sep. 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6265297 B
- JP 5772915 B
- JP 5804167 B
- JP 5874800 B
- JP 5794273 B

**Non-patent literature cited in the description**

- **SUGA ; KIMATA ; UCHIDA.** A Simple Switching Method for A Improved Power Factor Type Single Phase Converter. *IEEJ Transactions on Industry Applications,* 1996, vol. 116 (4), 420-426
- **UESGI.** Single-Phase Twice Voltage PFC Converter for Air Conditioner. *IEEJ Transactions on Industry Applications,* 1999, vol. 119 (5), 592-598